# NEUE EUROPÄISCHE PATENTSCHRIFT

(11) **EP 0 747 614 B2**
(45) Veröffentlichungstag und Bekanntmachung des Hinweises auf die Entscheidung über den Einspruch: **15.01.2003**
(45) Hinweis auf die Patenterteilung: 22.03.2000
(21) Anmeldenummer: 96108048.8
(22) Anmeldetag: 21.05.1996
(51) Int. Cl.: F16J 15/08

(54) **Metallische Zylinderkopfdichtung**
Metallic cylinder head gasket
Joint de culasse métallique

(30) Priorität: 07.06.1995 DE 19520695
(43) Veröffentlichungstag der Anmeldung: 11.12.1996
(73) Patentinhaber: ElringKlinger AG, 72581 Dettingen (DE)
(72) Erfinder: Diez, Armin, 73252 Lenningen (DE); Randecker, Hermann, 72581 Dettingen (DE)
(74) Vertreter: Sparing - Röhl - Henseler Patentanwälte

(56) Entgegenhaltungen:
- EP-A- 0 533 357
- EP-A- 0 544 951
- EP-A- 0 627 581
- EP-A- 0 633 396
- WO-A-96/38684
- GB-A- 2 097 872
- JP-A- 4 015 372
- JP-A- 62 224 772
- JP-U- 64 048 838

## Beschreibung

Die Erfindung betrifft eine metallische Zylinderkopfdichtung für eine Brennkraftmaschine, mit zwei äußeren Deckblechen und einem zwischen diesen angeordneten Trägerblech, die mit einem oder mehreren nebeneinander angeordneten Brennraumdurchgängen entsprechend den Brennkammern der Brennkraftmaschine versehen sind, wobei die Deckbleche um jeden Brennraumdurchgang herum mit Abstand zu diesem unter Belassung eines geraden Blechabschnitts im Durchgangsrandbereich mit einer zum Trägerblech weisenden Sicke versehen sind, zu deren Schutz benachbart zur Sicke unmittelbar um jeden Brennraumdurchgang herum verlaufend ein innerer massiver Verformungsbegrenzer vorgesehen ist.

Aus der EP-C-0 306 766 bzw. der EP-C-0 230 804 ist eine derartige metallische Zylinderkopfdichtung für eine Brennkraftmaschine bekannt, bei der ein Trägerblech zusammen mit mindestens einem gesickten Deckblech als Funktionsblech vorgesehen sind. Da sich der Dichtspalt zwischen Zylinderkopf und -block einer Brennkraftmaschine im Betrieb in Abhängigkeit vom Arbeitstakt des jeweils betrachteten Zylinders ändert, ist die Dichtung ständigen Pressungsänderungen unterworfen und muß zur Aufrechterhaltung einer einwandfreien Abdichtung dauerhafte Federungseigenschaften aufweisen.

Die Abdichtung wird hierbei durch eine Überhöhung der Zylinderkopfdichtung entlang des Brennraums und durch eine dahinter liegende Sicke vorgenommen. Letztere wirkt als Federelement und folgt infolge des Zünddrucks auftretenden vertikalen Relativbewegungen des Zylinderkopfs gegenüber dem Zylinderblock. Einerseits darf bei maximal belasteter Sikke keine unzulässig große Verformung auftreten, andererseits darf die Entlastung nicht vollständig, sondern nur soweit erfolgen, daß eine Mindestverformung beim höchsten auftretenden Brennraumdruck die erforderliche Abdichtung sicherstellt. Zwischen diesen beiden Eckpunkten der Verformung liegt der Arbeitsbereich der Sicke.

Um die Funktion der Sicke sicherzustellen, darf die Sicke also weder beim Einbau der Dichtung, noch im Betriebszustand vollständig verformt werden. Eine unzulässig große Verformung der Sicke vertikal zur Dichtungsebene wird bei den bekannten Dichtungen durch einen Verformungsbegrenzer gleichbleibender Stärke verhindert, der zugleich zur Überhöhung der Dichtung entlang des Brennraums dient.

Vor allen, wenn für Zylinderkopf und -block Materialien mit unterschiedlichen Wärmeausdehnungskoeffizienten gewählt werden (etwa ein Gußeisenblock mit einem Leichtmetallkopf), aber auch, wenn die Kühlungsverhältnisse unterschiedlich sind, treten Schiebebewegungen zwischen Zylinderblock und Zylinderkopf auf, die zu unerwünschten Eingrabungen insbesondere am Zylinderkopf führen.

Aus der DE-A-4 219 709 ist es bekannt, im Schnitt rechteckige Verformungsbegrenzer durch Fließpressen oder Anstauchen herzustellen. Beim Fließpressen fließt jedoch das Material in beiden Richtungen und nicht nur in der gewünschten weg, es ergeben sich große Materialspannungen mit sogenanntem Froscheffekt entsprechend einer Froschfeder. Beim Anstauchen benötigt man einen konischen Stempel, wasnicht zu sauber ausgebildeten Kanten führt, schlecht beherrschbar und kompliziert ist, so daß es für eine Serienfertigung ungeeignet ist.

Aufgabe der Erfindung ist es, eine metallische Zylinderkopfdichtung nach dem Oberbegriff des Anspruchs 1 zu schaffen, bei der die maximal zulässige Verformung der Sicke auch bei längerem Betrieb nicht überschritten wird.

Diese Aufgabe wird dadurch gelöst, daß wenigstens eine der einem entsprechenden Deckblech zugewandte Oberfläche des inneren Verformungsbegrenzers ballig ist.

Dadurch, daß der innere Verformungsbegrenzer an seiner dem Brennraumdurchgang zugewandten Seite an den den Deckblechen der Dichtung zugewandten Kanten mit Rundungen von ausreichendem Radius versehen ist, werden hohe Kantenpressungen am Rand des Brennraumdurchgangs vermieden, so daß Schiebebewegungen zwischen Zylinderblock und -kopf keine Eingrabungen mehr hervorrufen. Außerdem läßt sich dies ohne großen wirtschaftlichen Aufwand und ohne zusätzliche Teile erreichen. Eine beidseitig ballige Form des Verformungsbegrenzers ist hierbei besonders günstig und außerdem einfach herstellbar.

Weitere Ausgestaltungen der Erfindung sind der nachfolgenden Beschreibung und den Unteransprüchen sowie Verfahren zur Herstellung von Verformungsbegrenzern den Verfahrensansprüchen zu entnehmen.

Die Erfindung wird nachstehend anhand von in den beigefügten Abbildungen dargestellten Ausführungsbeispielen näher erläutert.

Fig. 1 zeigt schematisch und ausschnittweise eine Draufsicht auf eine Zylinderkopfdichtung.

Fig. 2 bis 5 zeigen ausschnittweise im Schnitt längs der Linie I-I von Fig. 1 unterschiedliche Ausführungsformen einer Zylinderkopfdichtung.

Fig. 6 und 7 veranschaulichen ein zweistufiges Verfahren zum Herstellen eines Verformungsbegrenzers.

Fig. 8 veranschaulicht eine Variante des Verfahrensgemäß den Fig. 6, 7.

Fig. 9 und 10 veranschaulichen ein weiteres Verfahren zum Herstellen eines Verformungsbegrenzers.

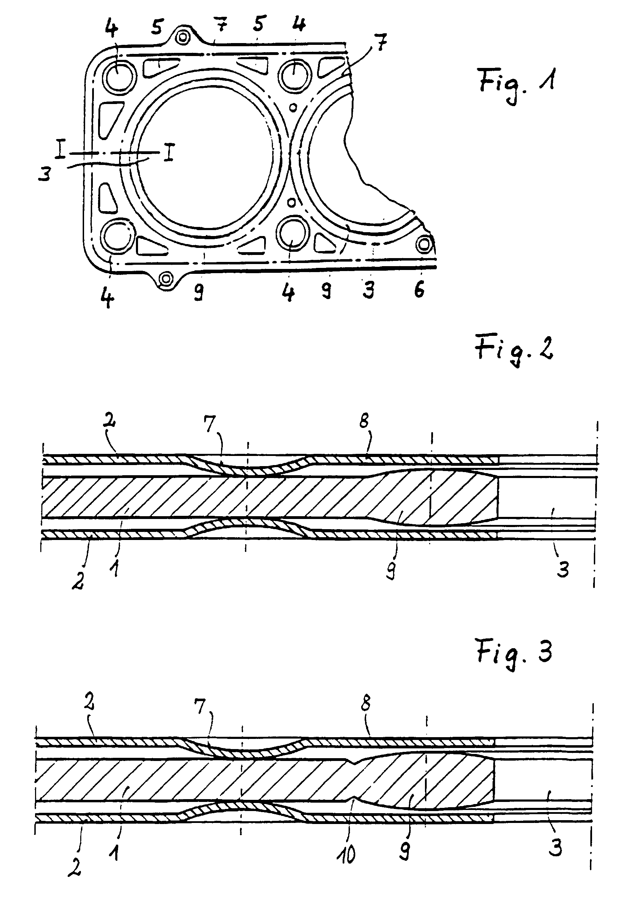

Die in Fig. 1 und 2 dargestellte, mehrlagige, metallische Zylinderkopfdichtung umfaßt ein Trägerblech 1, auf dessen beiden Seiten jeweils ein Deckblech 2 angeordnet ist. Die Dichtung, d.h. Trägerblech 1 und Deckbleche 2, weist eine Reihe von Brennraumdurchgängen 3 entsprechend den Brennräumen der zugehörigen Brennkaftmaschine sowie Schraubendurchtrittslöcher 4 für Schrauben, die zum Verspannen von Zylinderkopf und -block verwendet werden, sowie weiterhin Durchtrittsöffnungen 5, 6 für Kühlwasser bzw. öl auf.

Die gewöhnlich aus Federstahl hergestellten und ansonsten planen Deckbleche 2 sind mit Sicken 7 versehen, die mit Abstand unter Belassung eines ringförmigen, geraden Blechabschnitts 8 im Randbereich der Brennraumdurchgänge 3 angeordnet und zum Trägerblech 1 gerichtet sind.

Ferner sind üblicherweise um die Durchtrittsöffnungen 5, 6 und die Schraubendurchtrittslöcher 4 herum nicht dargestellte Halbsicken in den Deckblechen 2 vorgesehen.

Das ansonsten plane Trägerblech 1 ist im Randbereich der Brennraumdurchgänge 3 jeweils mit einem inneren Verformungsbegrenzer 9 für die benachbarte Sicke 7 versehen. Gemäß Fig. 2 ist bei diesem Ausführungsbeispiel der Verformungsbegrenzer 9 dadurch gebildet, daß das Trägerblech 1 benachbart zum Randbereich des jeweiligen Brennraumdurchgangs 3 und außerhalb des Sickenbereichs, d.h. innenseitig von der Sicke 7 verdickt ist und die Verdickung beidseitig eine ballige Oberfläche aufweist, wobei die Verdickung derart vorgenommen ist, daß der Verformungsbegrenzer 9 praktisch mittig zwischen den Deckblechen 2 angeordnet und somit bezüglich der Sicken 7 beider Deckbleche 2 gleichwirkend ist.

Die Stärke des Verformungsbegrenzers 9 ist derart bemessen, daß die geraden Blechabschnitte 8 der Deckbleche 2 beim Einspannen der Dichtung auf diesem zum Aufstand kommen, während gleichzeitig die Sicken 7 auf Pressung beansprucht werden. Infolge der balligen Ausbildung des Verformungsbegrenzers 9 werden Kantenpressungen vermieden, die sonst infolge von Schiebebewegungen zwischen Zylinderkopf und Zylinderblock zu Eingrabungen insbesondere in Aluminiumbauteilen führen könnten.

Bei der in Fig. 3 dargestellten Ausführungsform ist auf der dem Brennraumdurchgang 3 abgewandten Seite des Verformungsbegrenzers 9 das Trägerblech 1 beidseitig jeweils mit einer um den Verformungsbegrenzer 9 umlaufenden Kerbe 10 versehen, die, wie später erläutert wird, herstellungstechnische Gründe hat.

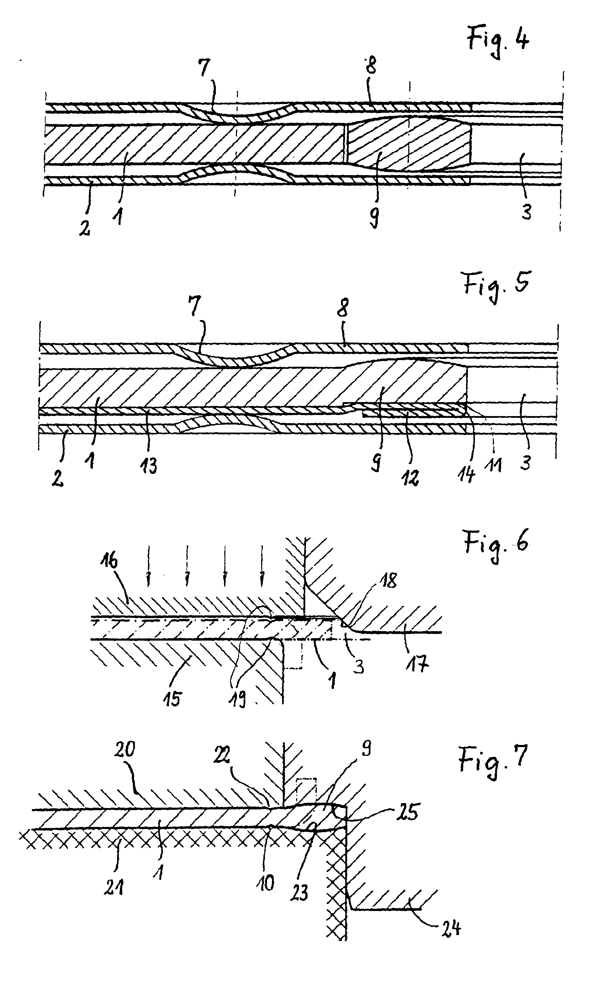

Bei der in Fig. 4 dargestellten Ausführungsform ist der ringförmige Verformungsbegrenzer 9 separat vom Trägerblech 1 ausgebildet und zwischen den Deckblechen 2 in einen entsprechend großen Durchgang des Trägerblechs 1 eingelegt.

Bei der in Fig. 5 dargestellten Ausführungsform ist der einstückig am Trägerblech 1 ausgebildete Verformungsbegrenzer 9 auf einer Seite (diejenige, die im eingebauten Zustand der Zylinderkopfdichtung zum Zylinderkopf gerichtet ist) mit einer balligen Oberfläche versehen, während auf der anderen Seite eine ringförmige, stufenförmige Ausnehmung 11 sowie ein hiervon teilweise aufgenommener umgefalzter Abschnitt 12 eines zusätzlichen Zwischenblechs 13 vorgesehen ist, das zwischen das Trägerblech 1 und das Deckblech 2, das der stufenförmigen Ausnehmung 11 zugewandt ist, geschichtet ist. Der umgefalzte Abschnitt 12 liefert ebenfalls am Brennraumdurchgang 3 eine Rundung 14 zur entsprechenden Erniedrigung der Kantenpressungen.

Der Verformungsbegrenzer 9 legt die Eckpunkte des Sickenarbeitsbereichs entsprechend vorgegebenen Betriebspunkten fest, wobei zur Anpassung hiervon an vorgegebene Auslegungspunkte eine Höhen- und/oder Breitenprofilierung des Verformungsbegrenzers 9 entlang des Umfangs des Brennraumdurchgangs 3 vorgesehen sein kann.

Im Bereich benachbart zu den Schraubendurchtrittslöchern 4 ist bei einer Höhenprofilierung die Höhe des Verformungsbegrenzers 9 niedriger als in den Zwischenschraubenbereichen und bei einer Breitenprofilierung die Breite des Verformungsbegrenzers 9 geringer als in den Zwischenschraubenbereichen.

Anstatt die Breite des Verformungsbegrenzers 9 unmittelbar zu variieren, kann auch der Auflagebereich der Deckbleche 2 durch einen entsprechend unrunden Ausschnitt für den Brennraumdurchgang 3 variiert werden.

Gegebenenfalls kann auch der Sickenarbeitsbereich durch entsprechende Vertiefung und/oder Erhöhung des Trägerblechs 1 im Sickenaufstandsbereich vergleichmäßigt sein (nicht dargestellt).

Gegebenenfalls kann sich der gerade Blechabschnitt 8 nur teilweise bis über den inneren Verformungsbegrenzer 9 erstrecken oder im eingespannten Zustand in bezug auf den Brennraumdurchgang 3 hinter dem inneren Verformungsbegrenzer 9 enden (nicht dargestellt).

In den Fig. 6 und 7 ist die Herstellung eines inneren Verformungsbegrenzers 9 in einstückiger Ausbildung mit dem Trägerblech 1 dargestellt. Nach dem Anbringen der Brennraumdurchgänge 3 in dem Trägerblech 1 unter Belassung eines Überstandes nach innen in den Bereich des Brennraumdurchgangs 3 wird das Trägerblech 1 zwischen einer Ziehmatrize 15 und einer Ziehplatte 16 eingespannt. Die Ziehplatte 16 wird beispielsweise mit starkem Federdruck oder hydraulisch gegen die Ziehmatrize 15 gedrückt. Die Ziehplatte 16 steht im Randbereich des Brennraumdurchgangs 3 gegenüber der Ziehmatrize 15 um etwa die Wandstärke des Trägerblechs 1 über und dient zur Führung eines Ziehstempels 17, der eine angeschrägte Führungskante 18 aufweist. Der Ziehstempel 17 stellt die Kante des Trägerblechs 1 am Brennraumdurchgang 3 in einem Winkel von etwa 90° gegenüber der Trägerblechebene auf, wobei die angeschrägte Führungskante 18 verhindert, daß eine Verjüngung des Trägerblechs 1 auftritt und dieses zwischen Ziehmatrize 15 und Ziehplatte 16 herausgezogen wird. Letzteres wird zweckmäßigerweise zusätzlich unterstützt durch fluchtende Vorsprünge 19 an der Ziehmatrize 15 und der Ziehplatte 16, die benachbart zum Bereich des späteren Verformungsbegrenzers 9 umlaufen und die Kerben 10 ausbilden, indem sie in das Material des Trägerblechs 1 eindringen.

Anschließend wird das Trägerblech 1 in einem Gesenk zwischen einer Prägeplatte 20 und einer Prägematrize 21 eingespannt, wobei an diesen befindliche Vorsprünge 22 entsprechend den Vorsprüngen 19 in die Kerben 10 eindringen. Die Prägematrize 21 steht im Bereich des Brennraumdurchgangs 3 gegenüber der Prägeplatte 20 entsprechend dem Radius des endgültigen Verformungsbegrenzers 9 über und ist gemäß dessen gewünschter Form, die ballig ist, mit einer Prägefläche 23 versehen. Mittels eines Prägestempels 24 wird der aufgestellte Rand am Brennraumdurchgang 3 durch Prägen zum endgültigen Verformungsbegrenzer 9 geprägt, wobei der Prägestempel 24 mit einer entsprechenden Prägefläche 25 versehen ist. Auf diese Weise können beispielsweise die Verformungsbegrenzer 9 gemäß den Fig. 2, 3 und 5 sowie bei gleichzeitiger Höhenprofilierung und/oder Breitenprofilierung hergestellt werden. Ein Zurückfließen des Materials während des Prägens wird durch die Vorsprünge 22 verhindert.

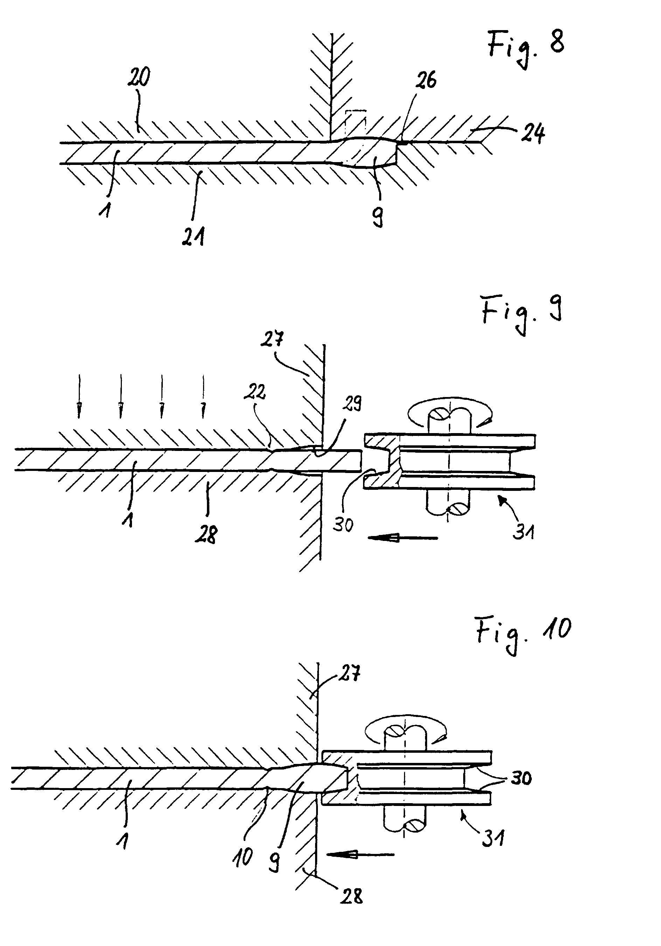

Wie in Fig. 8 veranschaulicht, kann die Prägematrize 21 auch die gesamte Negativform der Trägerplatte 1 einschließlich des oder der zugehörigen Verformungsbegrenzer 9 bilden, wobei der Prägestempel 24 bis auf die Prägematrize 21 fährt. Um einen eventuellen Materialüberschuß aufzunehmen, kann benachbart zum oberen Innenrand der Prägematrize 21 eine umlaufende Ausnehmung 26 sehr geringer Höhe vorgesehen sein, die zu einem leicht entfernbaren Grat aus überschüssigem Material am Verformungsbegrenzer 9 führt.

Gemäß einem anderen, nicht beanspruchten in Fig. 9 und 10 dargestellten Verfahren ist es ferner möglich, den Verformungsbegrenzer 9 durch Rollieren zu erzeugen, wobei das Trägerblech 1 zwischen zwei Einspannplatten 27, 28 eingespannt wird, die ebenfalls Vorsprünge 22 zum selben Zweck wie beim Prägen aufweisen können und bündig zueinander im Bereich des Brennraumdurchgangs 3 abschließen, wobei das Trägerblech 1 nach innen vorsteht. Benachbart zum Innenrand sind die Einspannplatten mit Formgebungsflächen 29 versehen. Ein oder mehrere, mit korrespondierenden Formgebungsflächen 30 versehenen Rollierwerkzeuge 31 werden verwendet, um am Brennraumdurchgang 3 den Vorformungsbegrenzer 9 mit gewünschter Querschnittsform auszubilden.

Der Verformungsbegrenzer 9 der Ausführungsform von Fig. 4 wird vorzugsweise aus Drahtringen hergestellt, die zunächst eine runde oder rechtekkige Querschnittsform aufweisen und durch Prägen in eine beidseitig ballige Form gebracht werden.

## Patentansprüche

1. Metallische Zylinderkopfdichtung für eine Brennkraftmaschine, mit zwei äußeren Deckblechen (2) und einem zwischen diesen angeordneten Trägerblech (1), die mit einem oder mehreren nebeneinander angeordneten Brennraumdurchgängen (3) entsprechend den Brennkammern der Brennkraftmaschine versehen sind, wobei die Deckbleche (2) um jeden Brennraumdurchgang (3) herum mit Abstand zu diesem unter Belassung eines geraden Blechabschnitts (8) im Durchgangsrandbereich mit einer zum Trägerblech (1) weisenden Sicke (7) versehen sind, zu deren Schutz benachbart zur Sicke (7) unmittelbar um jeden Brennraumdurchgang (3) herum verlaufend ein innerer massiver Verformungsbegrenzer (9) vorgesehen ist, **dadurch gekennzeichnet, daß** wenigsten eine der einem entsprechenden Deckblech (2) zugewandten Oberfläche des inneren Verformungsbegrenzers (9) ballig ist.

2. Dichtung nach Anspruch 1, **dadurch gekennzeichnet, daß** der innere Verformungsbegrenzer (9) durch Prägen des Trägerblechs (1) gebildet ist.

3. Dichtung nach Anspruch 1 oder 2, **dadurch gekennzeichnet, daß** der innere Verformungsbegrenzer (9) auf der der balligen Ausbildung abgewandten Seite zusätzlich einen im Durchgangsbereich der Brennraumdurchgänge (3) umgefalzten Abschnitt (12) eines Zwischenblechs (13) umfaßt, das zwischen dem dieser Seite benachbarten Deckblech (2) und dem Trägerblech (1) eingelegt ist.

4. Dichtung nach Anspruch 3, **dadurch gekennzeichnet, daß** der innere Verformungsbegrenzer (9) an der der balligen Ausbildung abgewandten Seite eine stufenförmige Ausnehmung (11) aufweist, die den umgefalzten Abschnitt (12) des Zwischenblechs (13) teilweise aufnimmt.

5. Dichtung nach einem der Ansprüche 1 bis 4, **dadurch gekennzeichnet, daß** der innere Verformungsbegrenzer (9) entsprechend einer gleichmäßigen Kraftverteilung im Durchgangsrandbereich höhen- und/oder breitenprofiliert ist, wobei gegebenenfalls der Sickenarbeitsbereich durch entsprechende Vertiefung und/oder Erhöhung des Trägerblechs (1) im Sickenaufstandsbereich vergleichmäβigt ist.

6. Dichtung nach einem der Ansprüche 1 bis 5, **dadurch gekennzeichnet, daß** sich der gerade Blechabschnitt (8) wenigstens teilweise bis über den inneren Verformungsbegrenzer (9) erstreckt.

7. Dichtung nach einem der Ansprüche 1 bis 3, **dadurch gekennzeichnet, daß** der gerade Blechabschnitt (8) im eingespannten Zustand in bezug auf den Brennraumdurchgang (3) hinter dem inneren Verformungsbegrenzer (9) endet.

8. Dichtung nach einem der Ansprüche 1 bis 7, **dadurch gekennzeichnet, daß** der innere Verformungsbegrenzer (9) etwa mittig zwischen beiden Deckblechen (2) angeordnet ist.

9. Verfahren zur Herstellung eines einen oder mehrere innere Verformungsbegrenzer aufweisenden Trägerblechs für eine metallische Zylinderkopfdichtung nach einem Ansprüche 1 bis 8, bei dem das Trägerblech nach Anbringung eines oder mehrerer Brennraumdurchgänge am jeweiligen Durchgangsrandbereich zu einem inneren Verformungsbegrenzer mechanisch umgeformt wird, **dadurch gekennzeichnet, daß** die Kanten des Durchgangsrandbereichs mittels eines Ziehstempels hochgestellt und anschließend in einem Gesenk zum inneren, massiven, wenigstens auf einer Seite balligen Verformungsbegrenzer geprägt werden.

10. Verfahren nach Anspruch 9, **dadurch gekennzeichnet, daß** ein Ziehstempel verwendet wird, dessen umlaufende Stirnkante abgeschrägt ist.

11. Verfahren nach Anspruch 9 oder 10, **dadurch gekennzeichnet, daß** vor dem Prägen auf beiden Seiten des Trägerblechs um den späteren Bereich des inneren Verformungsbegrenzers herum jeweils eine umlaufende Kerbe angebracht wird, in die beim Prägen entsprechende Vorsprünge von Einspannwerkzeugen für das Trägerblech eingreifen.

12. Verfahren nach einem der Ansprüche 9 bis 11, **dadurch gekennzeichnet, daß** der innere Verformungsbegrenzer beim Formungsvorgang entsprechend einer gleichmäßigen Kraftverteilung im Durchgangsrandbereich höhen- und/oder breitenprofiliert wird.

## Claims

1. Metallic cylinder head gasket for an internal combustion engine, with two outer cover plates (2) and a carrier plate (1) located therebetween, which are provided with one or more combustion chamber passages (3) arranged one beside the other, corresponding to the combustion chambers of the internal combustion engine, the cover plates (2) being provided around each combustion chamber passage (3) at a distance therefrom, leaving a straight plate section (8) in the edge region of the passage with a corrugation (7) pointing towards the carrier plate (1), for the protection of which, adjacent to the corrugation (7), an inner solid deformation limiter (9) is provided, extending around each combustion chamber passage (3), **characterised in that** at least one surface of the inner deformation limiter (9) facing the corresponding cover plate (2) is crowned.

2. Gasket according to Claim 1, **characterised in that** the inner deformation limiter (9) is formed by embossing the carrier plate (1).

3. Gasket according to Claim 1 or 2, **characterised in that** on the side remote from the crowned formation, the inner deformation limiter (9) additionally comprises a section (12) of an intermediate plate (13) crimped over in the transition region of the combustion chamber passage (3), which section (12) is inserted between the cover plates (2) adjacent to this side and the carrier plate (1).

4. Gasket according to Claim 3, **characterised in that** on the side remote from the crowned formation, the inner deformation limiter (9) comprises a stepped recess (11), which partly receives the crimped-over section (12) of the intermediate plate (13).

5. Gasket according to one of the Claims 1 to 4, **characterised in that** the inner deformation limiter (9) is profiled over its height and/or width corresponding to a uniform force distribution in the edge region of the passage, in which case, if necessary, the working region of the corrugation is made uniform by corresponding recessing and/or elevation of the carrier plate (1) in the standing-up region of the corrugation.

6. Gasket according to one of the Claims 1 to 5, **characterised in that** the straight sheet section (8) extends at least partly beyond the inner deformation limiter (9).

7. Gasket according to one of the Claims 1 to 3, **characterised in that** in the clamped state, the straight sheet section (8) terminates behind the inner deformation limiter (9) with respect to the combustion chamber passage (3).

8. Gasket according to one of the Claims 1 to 7, **characterised in that** the inner deformation limiter (9) is located approximately centrally between both cover plates (2).

9. Method for producing a carrier plate comprising one or more inner deformation limiters for a metallic cylinder head gasket according to one of the Claims 1 to 8, in which after making one or more combustion chamber passages, the carrier plate is deformed mechanically into an inner deformation limiter at the respective edge region of the passage, **characterised in that** the edges of the edge region of the passage are raised by means of a drawing punch and then embossed in a die to form the inner solid deformation limiter crowned at least on one side.

10. Method according to Claim 9, **characterised in that** a drawing punch is used the peripheral front edge of which is bevelled.

11. Method according to Claim 9 or 10, **characterised in that** before embossing, on both sides of the carrier plate around the subsequent region of the inner deformation limiter, respectively one peripheral notch is made, into which corresponding projections of clamping tools for the carrier plate engage at the time of embossing.

12. Method according to one of the Claims 9 to 11, **characterised in that**, in the shaping process, the inner deformation limiter is profiled as regards its height and/or width corresponding to a uniform force distribution in the edge region of the passage.

## Revendications

1. Joint de culasse métallique pour un moteur à combustion interne, comprenant deux tôles de recouvrement extérieures (2) et une tôle porteuse (1) disposée entre celles-ci, qui sont munies d'un ou plusieurs trous de chambres de combustion (3) disposés les uns à côté des autres pour correspondre aux chambres de combustion du moteur à combustion interne, dans lequel les tôles de recouvrement (2) sont munies, autour de chaque trou de chambre de combustion (3), à une certaine distance de celui-ci et en laissant subsister un segment de tôle rectiligne (8) dans la région du pourtour du trou, d'une nervure (7) en direction de la tôle porteuse (1), pour la protection de laquelle un limiteur de déformation intérieur massif (9) s'étendant immédiatement autour et sur tout le pourtour de chaque trou de chambre de combustion (3) est prévu à côté de la nervure (7), **caractérisé en ce qu'**au moins une des faces du limiteur de déformation intérieur (9) tournée vers une des tôles de recouvrement (2) correspondantes est bombée.

2. Joint selon la revendication 1, **caractérisé en ce que** le limiteur de déformation intérieur (9) est formé par matriçage de la tôle porteuse (1).

3. Joint selon la revendication 1 ou 2, **caractérisé en ce que** le limiteur de déformation intérieur (9) comprend en outre, du côté opposé au bombé, un segment (12), replié dans la région de traversée des trous des chambres de combustion (3), d'une tôle intermédiaire (13) qui est intercalée entre la tôle de recouvrement (2) adjacente à ce côté, et la tôle porteuse (1).

4. Joint selon la revendication 3, **caractérisé en ce que** le limiteur de déformation intérieur (9) présente, du côté opposé au bombé, un décrochement (11) en forme de gradin qui reçoit partiellement le segment replié (12) de la tôle intermédiaire (13).

5. Joint selon l'une des revendications 1 à 4, **caractérisé en ce que** le limiteur de déformation intérieur (9) est profilé en hauteur et/ou en largeur pour obtenir une répartition uniforme des forces dans la région du pourtour du trou, la zone du nervurage étant éventuellement régularisée par un creusement et/ou une surélévation correspondants de la tôle porteuse (1) dans la région de contact avec la nervure.

6. Joint selon l'une des revendications 1 à 5, **caractérisé en ce que** le segment de tôle rectiligne (8) s'étend au moins partiellement jusqu'au-delà du limiteur de déformation intérieur (9).

7. Joint selon l'une des revendications 1 à 3, **caractérisé en ce qu'**à l'état serré, le segment de tôle rectiligne (8) se termine au-delà du limiteur de déformation intérieur (9), relativement au trou de chambre de combustion (3).

8. Joint selon l'une des revendications 1 à 7, **caractérisé en ce que** le limiteur de déformation intérieur (9) est disposé en position à peu près centrale entre les deux tôles de recouvrement (2).

9. Procédé pour la fabrication d'une tôle porteuse présentant au moins un ou plusieurs limiteurs de déformation intérieurs pour un joint de culasse métallique selon l'une des revendications 1 à 8, dans lequel, après la formation d'un ou plusieurs trous de chambres de combustion, on déforme la tôle porteuse mécaniquement dans la région du pourtour de chaque trou pour former un limiteur de déformation intérieur, **caractérisé en ce qu'**on redresse les bords extrêmes de la région du pourtour du trou au moyen d'un poinçon d'emboutissage et on les matrice ensuite dans une matrice pour former le limiteur de déformation intérieur massif et bombé sur au moins une face.

10. Procédé selon la revendication 9, **caractérisé en ce qu'**on utilise un poinçon d'emboutissage dont l'arête frontale circonférentielle est chanfreinée.

11. Procédé selon la revendication 9 ou 10, **caractérisé en ce qu'**avant le matriçage, on forme sur chacune des deux faces de la tôle porteuse, autour de la future région du limiteur de déformation intérieur, une encoche circonférentielle dans laquelle des saillies correspondantes d'outils de serrage de la tôle porteuse s'engagent lors du matriçage.

12. Procédé selon l'une des revendications 9 à 11, **caractérisé en ce qu'**on donne au limiteur de déformation intérieur un profil en hauteur et/ou en largeur qui correspond à une répartition uniforme des forces dans la région du pourtour du trou.
